# DEMANDE DE BREVET EUROPEEN

(11) **EP 2 824 868 A1**
(43) Date de publication de la demande: **14.01.2015**
(21) Numéro de dépôt: 14176824.2
(22) Date de dépôt: 23.08.2002
(51) Int. Cl.: H04L 9/08, H04N 7/167, H04L 29/06

(54) **Réseau numérique local, procédés d'installation de nouveux dispositifs et procédés de diffusion et de réception de données dans un tel réseau**

(30) Priorité: 24.08.2001 FR 0111078
(62) Demande divisionnaire de: 02796308.1
(71) Demandeur: Thomson Licensing, 92130 Issy-les-Moulineaux (FR)
(72) Inventeur: Andreaux, Jean-Pierre, 1012 Amsterdam (NL); Diehl, Eric, 92443 Issy-les-Moulineaux (FR); Durand, Alain, 35576 Cesson-Sévigné (FR)
(74) Mandataire: Ståhl, Björn Niclas

(57) **Abrégé**

L'invention concerne un réseau numérique local comprenant:
- au moins un dispositif source (1) destiné à diffuser des données (60) sur le réseau; et
- au moins un dispositif récepteur (2) destiné à recevoir lesdites données (60).

Le dispositif source (1) utilise une clé de chiffrement du réseau active (Kn[0]) pour chiffrer des données susceptibles d'être diffusées dans le réseau et le dispositif récepteur (2) contient :
- une clé de déchiffrement du réseau active (Kn[0]) pour déchiffrer des données chiffrées en utilisant ladite clé de chiffrement active et
- au moins une clé de déchiffrement du réseau (Kn[i]) pour déchiffrer des données chiffrées à l'aide d'une clé de chiffrement utilisée antérieurement dans le réseau.

L'invention concerne également l'installation de nouveaux dispositifs dans un tel réseau ainsi que la transmission de données d'un dispositif source à un dispositif récepteur.

## Description

### Domaine de l'invention

La présente invention se rapporte d'une manière générale au domaine des réseaux numériques locaux et plus particulièrement au domaine des réseaux numériques domestiques. Elle concerne plus précisément la protection contre la copie des données numériques circulant dans de tels réseaux.

### Etat de la technique

Un tel réseau est constitué d'un ensemble de dispositifs reliés entre eux par un bus numérique, par exemple un bus selon la norme IEEE 1394. Il comprend notamment deux types de dispositifs :
- Des dispositifs sources capables d'émettre des données sur le réseau : Ces dispositifs peuvent récupérer les données à travers un « canal » externe au réseau.
- Des dispositifs récepteurs, adaptés à recevoir les données circulant sur le réseau, pour les traiter ou les présenter à l'utilisateur.

Ainsi, si on prend l'exemple d'un réseau numérique domestique destiné à véhiculer des données audio et/ou vidéo dans différentes pièces d'une maison, les dispositifs sources sont par exemple des décodeurs numériques recevant des programmes vidéo de l'extérieur du réseau, via une antenne satellite ou via une connexion au câble, ou bien des lecteurs de disques optiques diffusant sur le réseau, sous forme numérique, des données (audio et/ou vidéo) lues sur un disque (le disque contient dans ce cas des données provenant de l'extérieur du réseau). Les dispositifs récepteurs sont par exemple des récepteurs de télévision permettant de visualiser des programmes vidéo reçus du réseau ou, d'une manière plus générale tout type d'appareil ayant la capacité de déchiffrer des données chiffrées.

Si on se place du point de vue des fournisseurs de contenu qui fournissent les données en provenance de l'extérieur du réseau local, notamment des prestataires de services diffusant des programmes télévisés payants ou bien des éditeurs de disques optiques par exemple, il est nécessaire d'éviter que ces données transmises ne soient copiées et puissent circuler facilement (par exemple en étant copiées sur un disque optique ou tout autre support d'enregistrement) d'un réseau local à l'autre.

Pour cela, il est connu de transmettre les données sous forme secrète en les chiffrant à l'aide d'algorithmes de cryptographie utilisant des clés qui sont connues au préalable des appareils autorisés à recevoir ces données ou bien qui sont échangées selon des protocoles particuliers sécurisés entre le fournisseur de contenu et ces appareils.

La demande de brevet français déposée le 13 avril 1999, au nom de THOMSON multimédia, et publiée sous la référence FR-A-2 792 482, concerne un réseau domestique dans lequel une clé publique propre au réseau est utilisée pour chiffrer des données circulant entre des appareils du réseau, typiquement en provenance des dispositifs source précédemment mentionnés vers des dispositifs récepteurs. Seuls les appareils récepteurs de ce réseau possèdent la clé privée correspondant à la clé publique. Le couple (clé publique, clé privée) étant spécifique au réseau, des données chiffrées dans le cadre de ce réseau ne peuvent être déchiffrées par des appareils d'un autre réseau.

La demande de brevet français No. 01 05568, déposée le 25 avril 2001 au nom du demandeur THOMSON Licensing S.A. concerne quant à elle un procédé de gestion de clés dans un réseau tel que ci-dessus utilisant essentiellement des clés symétriques. Les dispositifs sources chiffrent les données à l'aide d'une première clé symétrique renouvelée très fréquemment et ils transmettent cette première clé aux autres appareils du réseau sous forme chiffrée à l'aide d'une deuxième clé symétrique spécifique au réseau. La deuxième clé symétrique est contenue dans les dispositifs récepteurs.

Dans les deux solutions exposées ci-dessus, les données sont protégées par une même clé de chiffrement (ou une même paire de clés privée/publique) spécifique au réseau et par un même algorithme de chiffrement. Cependant, il peut parfois être nécessaire de renouveler ces clés et/ou l'algorithme de chiffrement utilisé, en particulier si l'algorithme de chiffrement utilise des clés trop courtes ou si celui-ci n'est plus sûr, indépendamment de la longueur de la clé, pour utiliser des clés de longueur plus importante ou un algorithme de chiffrement plus puissant. Malheureusement dans ce cas les données enregistrées précédemment dans le réseau ne pourraient plus être déchiffrables avec la nouvelle clé et/ou le nouvel algorithme de chiffrement.

### Exposé de l'invention

L'invention a pour objet un réseau numérique local comprenant :
- au moins un dispositif source destiné à diffuser des données sur le réseau; et;
- au moins un dispositif récepteur destiné à recevoir lesdites données.

Selon l'invention, le dispositif source utilise une clé de chiffrement du réseau active pour chiffrer des données susceptibles d'être diffusées dans le réseau ; et le dispositif récepteur contient une clé de déchiffrement du réseau active pour déchiffrer des données chiffrées en utilisant la clé de chiffrement active et au moins une autre clé de déchiffrement du réseau pour déchiffrer des données chiffrées à l'aide d'une clé de chiffrement utilisée antérieurement dans le réseau.

Le réseau numérique local peut également comporter l'une ou plusieurs des caractéristiques suivantes :
- le dispositif récepteur contient toutes les clés de déchiffrement du réseau utilisées antérieurement depuis la création du réseau ;
- le dispositif source contient la clé de chiffrement du réseau active et il chiffre les données susceptibles d'être diffusées dans le réseau avec cette clé du réseau active ;
- le dispositif source contient une première clé symétrique ainsi que cette première clé symétrique chiffrée avec la clé de chiffrement du réseau active ; il chiffre les données susceptibles d'être diffusées dans le réseau avec la première clé symétrique et il est adapté à diffuser, avec les données chiffrées, la première clé symétrique chiffrée avec la clé de chiffrement du réseau active ;
- le dispositif source et le dispositif récepteur utilisent des procédés de chiffrement symétriques et les clés de chiffrement et les clés de déchiffrement correspondantes utilisées dans le réseau sont identiques.

L'invention concerne également un procédé d'installation d'un nouveau dispositif récepteur dans un réseau numérique local tel que ci-dessus comprenant déjà au moins un dispositif récepteur. Selon ce procédé, un dispositif récepteur préexistant du réseau, possédant la clé de déchiffrement du réseau active et au moins une clé de déchiffrement utilisée précédemment dans le réseau, et ayant la capacité de les transmettre de façon sécurisée, transmet lesdites clés de déchiffrement au nouveau dispositif récepteur.

Un autre aspect de l'invention concerne un procédé d'installation d'un nouveau dispositif source dans un réseau numérique local tel que ci-dessus dans lequel le dispositif source et le dispositif récepteur utilisent des procédés de chiffrement symétriques et les clés de chiffrement et les clés de déchiffrement correspondantes utilisées dans le réseau sont identiques. Selon ce procédé, un dispositif récepteur préexistant du réseau, possédant la clé de chiffrement/déchiffrement du réseau active et au moins une clé de chiffrement/ déchiffrement utilisée précédemment dans le réseau et ayant la capacité de les transmettre de façon sécurisée, transmet la clé de chiffrement/déchiffrement du réseau active au nouveau dispositif source.

L'invention concerne aussi un procédé de diffusion de données par un dispositif source raccordé à un réseau tel que ci-dessus dans lequel les clés de chiffrement et les clés de déchiffrement utilisées sont identiques. Ce procédé consiste à chiffrer les données à l'aide de la clé de chiffrement/déchiffrement du réseau active ; et à diffuser les données chiffrées accompagnées d'une empreinte de la clé active, l'empreinte étant calculée à l'aide d'une fonction à sens unique appliquée à la clé du réseau active.

L'invention concerne également un procédé de réception de données chiffrées dans un dispositif récepteur raccordé à un réseau tel que mentionné plus haut, les données ayant été diffusées selon le procédé décrit ci-dessus et le dispositif récepteur contenant en outre une empreinte de chaque clé de chiffrement/déchiffrement qu'il contient, calculée à l'aide d'une fonction à sens unique appliquée à ladite clé. Le procédé consiste à extraire des données reçues une empreinte de clé ; à comparer l'empreinte extraite avec les empreintes des clés de chiffrement/déchiffrement contenues dans le dispositif récepteur ; et en cas d'égalité entre l'empreinte extraite et l'une des empreintes stockées dans le dispositif récepteur, à déchiffrer les données avec la clé correspondant à ladite empreinte.

L'invention concerne encore un autre procédé de diffusion de données par un dispositif source raccordé à un réseau tel que mentionné plus haut. Ce procédé consiste à : (a) appliquer une fonction à sens unique à une première partie des données ; (b) chiffrer le résultat du calcul effectué à l'étape (a) et une deuxième partie des données à protéger à l'aide de la clé de chiffrement du réseau active ; et (c) diffuser lesdites données chiffrées à l'étape (b) ainsi que la première partie des données sur le réseau.

L'invention concerne aussi un procédé de réception de données, diffusées selon le procédé ci-dessus, dans un dispositif récepteur raccordé à un réseau tel que décrit ci-dessus. Ce procédé consiste à : (a) appliquer une fonction à sens unique à une première partie des données non chiffrées ; (b) déchiffrer une seconde partie des données à l'aide d'une clé de déchiffrement du réseau contenue dans le dispositif récepteur, et (c) comparer le résultat du déchiffrement d'une portion des données déchiffrées à l'étape (b) avec le résultat du calcul effectué à l'étape (a) pour :
- en cas d'égalité, récupérer la portion restante des données déchiffrées à l'étape (b) ; et
- en cas de différence, retourner à l'étape (b) pour effectuer le déchiffrement de la seconde partie des données à l'aide d'une autre clé de déchiffrement du réseau contenue dans le dispositif récepteur.

L'invention concerne en outre un troisième procédé de diffusion de données par un dispositif source raccordé à un réseau tel que décrit plus haut. Le procédé consiste à chiffrer les données à l'aide de la clé de chiffrement du réseau active ; et à diffuser lesdites données chiffrées ainsi qu'un index correspondant à la clé active du réseau.

Un procédé de réception de données, diffusées selon le procédé ci-dessus, dans un dispositif récepteur raccordé à un réseau tel que mentionné plus haut consiste à extraire des données reçues un index correspondant à la clé de chiffrement de réseau utilisée pour chiffrer les données ; à déduire de cet index la clé de déchiffrement de réseau correspondante ; et à déchiffrer les données à l'aide de la clé de déchiffrement.

### Brève description des dessins

D'autres caractéristiques et avantages de l'invention apparaîtront à travers la description de plusieurs exemples de réalisation particuliers non limitatifs, explicités à l'aide des figures jointes, parmi lesquelles :
- la figure 1 représente schématiquement un réseau selon l'invention ; et
- la figure 2 représente des données circulant dans ce réseau.

### Description détaillée de modes de réalisation de l'invention

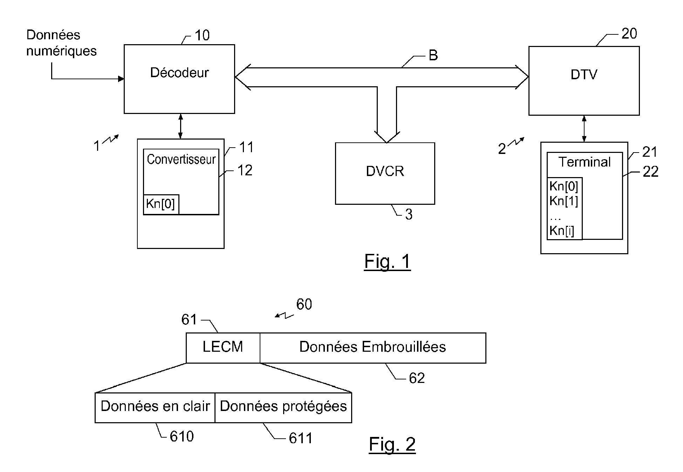

Sur la figure 1, nous avons représenté de manière schématique un exemple de réseau numérique domestique dans lequel les données sont protégées contre la copie en utilisant les principes décrit dans les demandes de brevets précitées (demande FR-A-2 792 482 au nom de THOMSON multimedia et demande FR No. 01 05568 au nom de THOMSON Licensing S.A.) auxquelles on pourra se référer pour plus de détails.

Le réseau comprend un dispositif source 1, un dispositif récepteur 2 et un dispositif d'enregistrement 3 reliés ensembles par un bus numérique B, qui est par exemple un bus selon la norme IEEE 1394.

Le dispositif source 1 comprend un décodeur numérique 10 doté d'un lecteur de carte à puce muni d'une carte à puce 11. Ce décodeur reçoit des données numériques, notamment des programmes audio/vidéo distribués par un prestataire de service.

Le dispositif récepteur 2 comprend un récepteur de télévision numérique (DTV) 20 doté d'un lecteur de carte à puce muni d'une carte à puce 21 et le dispositif d'enregistrement 3 est notamment un magnétoscope numérique (DVCR).

Les données numériques qui entrent sur le réseau via le dispositif source 1 sont en général des données embrouillées selon le principe de la télévision payante. Les données sont embrouillées à l'aide de mots de contrôle (CW) qui sont eux-même transmis dans le flux de données sous forme chiffrée à l'aide d'une clé de chiffrement K en étant contenus dans des messages de contrôle (ECM, de l'anglais « Entitlement Control Message »). La clé de chiffrement K est mise à la disposition des utilisateurs qui ont payé pour recevoir les données, notamment en étant stockée dans une carte à puce. Dans l'exemple de la figure 1, on suppose que la carte à puce 11 contient une telle clé K.

Le dispositif source 1 qui reçoit ces données numériques embrouillées les met ensuite en forme pour qu'elles soient diffusées sur le réseau numérique. Pour cela, les messages ECM contenant les mots de contrôle chiffrés à l'aide de la clé K sont transformés par un module convertisseur 12 contenu dans la carte à puce 11 en messages LECM (de l'anglais « Local Entitlement Control Message ») contenant les mots de contrôle déchiffrés, les messages LECM étant protégés à l'aide d'une clé spécifique au réseau domestique local.

Les données qui circulent sur le réseau sont donc constituées de paquets 60 tels que représentés sur la figure 2. Un tel paquet 60 contient : des données embrouillées 62 et un message LECM 61. Le message LECM comprend lui-même deux parties :
- une partie 610 contenant des données en clair, c'est à dire non chiffrées. Il peut s'agir notamment d'en-têtes de paquets, de la taille du message LECM, d'un numéro de version du système de protection contre la copie, etc. ; et
- une partie 611 contenant des données protégées, notamment les mots de contrôle CW.

On considèrera dans la suite, dans un souci de simplification, que les données protégées dans la partie 611 du message LECM sont chiffrées à l'aide d'une clé secrète (ou clé symétrique) du réseau Kn. Cependant, l'invention s'applique également en variante dans le cas où un système de gestion de clés plus complexe est utilisé, comme par exemple celui décrit dans la demande précitée FR No. 01 05568 au nom de THOMSON Licensing S.A. Cette variante sera exposée plus brièvement dans les modes de réalisation décrits ultérieurement.

Les paquets de données tels que le paquet 60 sont reçus par le dispositif récepteur 2 qui traite les messages LECM dans un module terminal 22 de la carte à puce 21. Le module terminal 22 contient la clé secrète du réseau Kn et est ainsi capable de déchiffrer la partie protégée des messages LECM. A l'aide du contenu de ces messages déchiffrés, le dispositif récepteur récupère les mots de contrôle CW ayant servi à embrouiller les données « utiles » 62 et est ainsi en mesure de désembrouiller ces données pour les présenter à un utilisateur.

On notera que le dispositif d'enregistrement 3 reçoit les données à enregistrer sous la forme des paquets 60 contenant les données embrouillées.

Bien entendu, un réseau numérique domestique peut contenir plusieurs dispositifs sources, plusieurs dispositifs récepteurs et plusieurs dispositifs d'enregistrement. Dans ce cas, tous les convertisseurs des dispositifs sources doivent contenir la clé secrète Kn du réseau pour générer les messages LECM et tous les terminaux des dispositifs récepteurs doivent contenir la clé Kn pour déchiffrer la partie protégée des messages LECM.

De plus un réseau numérique domestique peut évoluer. L'utilisateur peut ainsi ajouter ou retirer des appareils dans le réseau. Il peut être nécessaire de changer la clé du réseau Kn ou d'utiliser un nouvel algorithme de chiffrement, notamment lorsque la sécurité du système est compromise.

Selon le principe de l'invention, chaque module terminal d'un dispositif récepteur détient l'ensemble des clés Kn[i] qui ont été utilisées depuis la création du réseau numérique domestique. Parmi celles-ci, une seule clé est « active » ; dans la suite on la notera Kn[0]. Les modules convertisseurs des dispositifs sources en revanche ne contiennent que cette clé de réseau active Kn[0].

Ainsi, les données enregistrées anciennement dans le réseau peuvent toujours être lues par les dispositifs de réception qui possèdent toutes les clés utilisées pour chiffrer les messages LECM depuis la création du réseau. Les dispositifs sources quant à eux n'ont besoin que de la clé active Kn[0] pour générer des messages LECM pour des nouvelles données entrant dans le réseau.

On notera à ce propos que les données numériques entrant dans le réseau ne sont pas forcément sous la forme décrite précédemment (données embrouillées par des mots de contrôle contenus sous forme chiffrée dans des messages ECM) mais quelle que soit la forme sous laquelle le dispositif source reçoit les données de l'extérieur du réseau, il les émet sur le réseau sous la forme de paquets tels celui représenté à la figure 2. Au besoin, le dispositif source génère lui-même les mots de contrôle et il embrouille les données à l'aide de ces mots de contrôle avant de les transmettre dans la partie protégée du message LECM.

Comme on l'a vu plus haut, tous les dispositifs récepteurs possèdent (dans leur module terminal) l'ensemble des clés Kn[i]. Lorsqu'un nouveau dispositif récepteur est connecté au réseau, il reçoit l'ensemble de ces clés d'un dispositif récepteur particulier du réseau, le géniteur, qui indique également quelle clé est active.

Chaque dispositif récepteur peut en effet être dans l'un des états suivants : Vierge, Géniteur ou Stérile.

Un dispositif récepteur Vierge est défini par le fait qu'il ne comporte pas les clés du réseau Kn[i]. C'est typiquement un dispositif non encore relié au réseau. C'est l'état par défaut d'un dispositif récepteur.

Un dispositif Stérile est défini par le fait qu'il possède les clés du réseau Kn[i], mais qu'il ne peut pas les transmettre à un autre dispositif.

Un dispositif Géniteur est défini par le fait qu'il possède les clés du réseau Kn[i], et qu'il peut les transmettre à d'autres dispositifs du réseau. Il n'existe qu'un seul dispositif géniteur dans le réseau.

L'état d'un dispositif récepteur est mémorisé par un indicateur d'état, par exemple un registre se trouvant dans le module terminal 22 du dispositif récepteur.

On trouvera plus de détails sur la manière de créer un nouveau réseau et la manière d'échanger les clés entre les dispositifs lorsque des nouveaux dispositifs sont connectés au réseau dans les demandes de brevet précitées (demande FR-A-2 792 482 au nom de THOMSON multimedia et demande FR No. 01 05568 au nom de THOMSON Licensing S.A.).

Quand un nouveau dispositif source est connecté au réseau, le dispositif récepteur géniteur lui transmet seulement la clé de réseau active Kn[0]. La clé Kn[0] est alors mémorisée dans le module convertisseur du nouveau dispositif source. Dans la variante de réalisation utilisant un système de gestion de clés plus complexe, le dispositif source ne reçoit pas la clé de réseau active elle-même mais une information basée sur cette clé. Plus précisément, comme cela est exposé dans la demande FR No. 01 05568 précitée, le nouveau dispositif source génère une clé de chiffrement symétrique Kc qui est utilisée ensuite pour chiffrer les données à protéger du message LECM. Il transmet de manière sécurisée cette clé symétrique Kc au dispositif récepteur géniteur du réseau qui lui retourne la clé Kc chiffrée avec la clé de réseau active Kn[0]. Le nouveau dispositif source mémorise ensuite le résultat de ce chiffrement E_{Kn[0]}(Kc) dans son module convertisseur. Lorsque ce nouveau dispositif récepteur diffusera ultérieurement des données dans le réseau, il inclura dans la partie en clair 610 des messages LECM le chiffrement E_{Kn[0]}(Kc) de la clé symétrique Kc avec la clé de réseau active Kn[0].

Lorsqu'un dispositif récepteur reçoit des données à présenter à un utilisateur, ces données étant transmises sous la forme de paquets 60 contenant chacun des données embrouillées et un message LECM, le dispositif récepteur doit d'abord déterminer avec quelle clé Kn[i] ont été chiffrées les données du message LECM.

Ceci peut être effectué par un essai exhaustif de toutes les clés mémorisées dans le module terminal du dispositif récepteur (mode de réalisation B décrit ci-dessous), ou par l'utilisation d'un index (mode de réalisation C décrit ci-dessous), ou encore, de manière préférentielle, par l'utilisation d'empreintes de la clé contenues dans le message LECM (mode de réalisation A décrit ci-dessous).

### A] Utilisation d'empreintes

On suppose dans ce mode de réalisation que chaque dispositif récepteur contient une table mémorisée dans son module terminal telle que la table 1 ci-dessous dans laquelle :
- la colonne « Clé » contient chacune des N clés secrètes du réseau qui a été ou est active dans le réseau ; la clé de réseau active est la clé Kn[0]. Le champ contenant la clé a une taille fixe, assez grande pour tenir compte des évolutions futures des tailles de clés, mais les clés mémorisées peuvent avoir une taille inférieure à la taille du champ ;
- la colonne « H(Clé) » contient le résultat d'une fonction H à sens unique appliquée à chacune des clés Kn[i] ; on utilisera préférentiellement la fonction de hachage SHA-1 ;
- la colonne « @fonction_traitement » contient un pointeur vers une fonction de traitement contenue dans un logiciel embarqué dans la carte à puce contenant le module terminal.

**Table 1**

| **Clé** | **H(Clé)** | **@fonction_traitement** |
|---|---|---|
| Kn[0] | H(Kn[0]) | @fonction_traitement [0] |
| ... | ... | ... |
| Kn[i] | H(Kn[i]) | @fonction_traitement [i] |
| ... | ... | ... |
| Kn[N] | H(Kn[N]) | @fonction_traitement [N] |

Selon ce mode de réalisation, lorsqu'un nouveau dispositif source est raccordé au réseau, le dispositif récepteur géniteur lui transmet la clé de réseau active Kn[0]. La clé Kn[0] est stockée dans le module convertisseur du dispositif source et le module convertisseur calcule, à l'aide de la fonction H à sens unique précitée, l'empreinte H(Kn[0]) de cette clé.

Tous les modules convertisseurs des dispositifs source du réseau possèdent donc la clé Kn[0] et son empreinte H(Kn[0]).

Lorsqu'un module convertisseur d'un dispositif source doit générer un nouveau message LECM pour transmettre de nouvelles données sur le réseau, il utilise la clé active Kn[0] pour chiffrer les données de la partie protégée du message LECM (notamment pour chiffrer le mot de contrôle CW) et il insère l'empreinte H(Kn[0]) de la clé active, dans la partie du message LECM contenant les données en clair.

Dans la variante de réalisation utilisant un système de gestion de clés plus complexe, le dispositif source ne reçoit pas la clé de réseau active Kn[0] elle-même mais une information basée sur cette clé (E_{Kn[0]}(Kc)). Il reçoit en outre, selon ce mode de réalisation A, l'empreinte H(Kn[0]) de la clé active qu'il mémorise dans son module convertisseur. Lorsqu'il génère un nouveau message LECM, le module convertisseur chiffre les données de la partie à protéger avec la clé de chiffrement symétrique Kc et il insère dans la partie en clair du message LECM l'empreinte H(Kn[0]) de la clé active et le chiffrement de la clé Kc à l'aide de cette clé active Kn[0].

Comme le réseau évolue au cours du temps et que de nouvelles clés sont utilisées en tant que clé de réseau active, les données enregistrées dans le réseau contiennent des messages LECM chiffrés avec différentes clés utilisées successivement en tant que clé de réseau active.

Quand l'utilisateur désire rejouer sur un dispositif récepteur des données enregistrées au préalable, le module terminal du dispositif récepteur reçoit des messages LECM qu'il doit déchiffrer en utilisant la bonne clé mémorisée dans la table 1. Pour cela, le module terminal extrait tout d'abord de la partie en clair du message LECM l'empreinte H(Kn[j]) de la clé utilisée pour chiffrer les données de la partie protégée du message LECM. Il compare ensuite cette empreinte H(Kn[j]) avec toutes celles mémorisées dans la table 1 et, si une valeur correspond, il appelle alors la fonction située à l'adresse @fonction_traitement [j] qui effectue le déchiffrement de la partie protégée du message LECM à l'aide de la clé Kn[j].

Si par contre aucune empreinte ne correspond dans la table 1, cela signifie que les données reçues n'ont pas été enregistrées dans le réseau domestique. Le message LECM ne peut donc pas être déchiffré et les données correspondantes ne peuvent pas être désembrouillées.

On notera que les différentes fonctions de traitement utilisées peuvent non seulement utiliser des algorithmes de chiffrement différents mais également effectuer d'autres traitements sur les données.

Par exemple, lorsque la partie protégée du message LECM est chiffrée à l'aide d'une clé symétrique Kc comme cela a été décrit ci-dessus dans une variante de réalisation, la fonction de traitement effectue d'abord le déchiffrement de l'information E_{Kn[0]}(Kc), extraite de la partie en clair du message LECM, pour récupérer la clé Kc avant de déchiffrer les données protégées avec cette clé Kc.

### B] Essai systématique des clés

Selon ce mode de réalisation, chaque module terminal des dispositifs récepteurs contient la liste des clés Kn[0],..., Kn[i], ..., Kn[N] qui ont été utilisées dans le réseau depuis sa création.

Chaque module convertisseur d'un dispositif source contient quant à lui la clé de réseau active Kn[0]. Lorsqu'il doit générer un message LECM, le convertisseur chiffre les données à protéger avec la clé Kn[0]. Il calcule également le résultat d'une fonction à sens unique, notamment un « CRC » (de « Check Redundancy Code »), sur tout ou partie des données en clair du message LECM et il chiffre ce CRC avec la clé Kn[0], le résultat de ce chiffrement étant inséré dans la partie protégée du message LECM.

Lorsqu'un module terminal d'un dispositif récepteur reçoit un message LECM à déchiffrer, il effectue de manière systématique un déchiffrement des données contenues dans la partie protégée du message LECM à l'aide de chaque clé Kn[i] mémorisée dans le module terminal. Il calcule également le CRC à partir des données contenues dans la partie en clair du message LECM et il compare ensuite chaque résultat de déchiffrement du CRC avec celui calculé à partir des données en clair. Lorsque le résultat est identique cela signifie que la clé utilisée pour déchiffrer est celle qui a servi à chiffrer le message LECM.

Le module terminal est donc en mesure de récupérer les données protégées (dont les mots de contrôle) du message LECM et de désembrouiller les données pour les présenter à l'utilisateur.

Lorsqu'on utilise la variante de réalisation avec un système de gestion de clés plus complexe mentionnée plus haut, le module convertisseur du dispositif source chiffre les données à protéger du message LECM (y compris le résultat du CRC) avec la clé symétrique Kc et il insère dans la partie en clair du message LECM le chiffrement de la clé Kc à l'aide de la clé de réseau active Kn[0].

Le module terminal d'un dispositif récepteur qui reçoit un tel message LECM effectue quant à lui les mêmes opérations que celles décrites ci-dessus mais avec une étape supplémentaire, c'est à dire qu'il effectue tout d'abord un déchiffrement de l'information E_{Kn[j]}(Kc), extraite de la partie en clair du message LECM, à l'aide d'une première clé Kn[i] pour récupérer la supposée clé Kc. Il essaie ensuite de déchiffrer la partie protégée du message LECM avec cette clé Kc. Si la clé Kn[i] correspond à celle qui a été utilisée pour chiffrer la clé Kc, alors le CRC retrouvé dans la partie protégée des données correspondra au CRC calculé sur la partie en clair des données. Autrement, le module terminal poursuit en essayant une autre clé Kn[i+1].

### C] Utilisation d'un index

Selon ce mode de réalisation, chaque module terminal des dispositifs récepteurs possède un nombre aléatoire de grande taille appelé « Espace_clé ». Ce nombre est préférentiellement créé à l'initialisation du système, par exemple lorsque les cartes à puces contenant les modules terminaux sont créées.

Toutes les clés successives Kn[i] utilisées dans le réseau sont extraites de ce nombre Espace_clé :
- soit chaque clé représente un sous-ensemble du nombre Espace_clé ;
- soit chaque clé est le résultat d'un calcul effectué à partir du nombre Espace_clé ou d'une partie de ce nombre.

On suppose de plus, dans ce mode de réalisation que chaque dispositif récepteur contient une table mémorisée dans son module terminal telle que la table 2 ci-dessous contenant des index et, pour chaque index, un pointeur vers une fonction de traitement contenue dans un logiciel embarqué dans la carte à puce contenant le module terminal.

**Table 2**

| **Index** | **@fonction_traitement** |
|---|---|
| [0] | @fonction_traitement[0] |
| ... | ... |
| [i] | @fonction_traitement[i] |
| ... | ... |
| [N] | @fonction_traitement[N] |

Chaque index de la table 2 correspond à l'utilisation d'une clé différente Kn[i] et la fonction de traitement située à l'adresse @fonction_traitement[i] permet d'extraire cette clé à partir du nombre Espace_clé.

Les modules convertisseurs situés dans les dispositifs sources contiennent quant à eux la clé de réseau active Kn[0] et l'index correspondant [0]. Lorsqu'ils génèrent un message LECM, ils utilisent la clé Kn[0] pour chiffrer les données de la partie protégée et ils insèrent l'index [0] dans la partie en clair du message LECM.

De ce fait, lorsqu'un module terminal reçoit un message LECM, il va lire dans la partie en clair l'index [i] qui y est contenu et il appelle la fonction située à l'adresse @fonction_traitement[i] pour calculer la clé Kn[i] qui a été utilisée pour chiffrer une partie du message LECM. Il peut ensuite déchiffrer la partie protégée du message LECM grâce à cette clé Kn[i].

Dans la variante de réalisation utilisant une gestion de clés plus complexes, les modules convertisseurs chiffrent les données à protéger des messages LECM avec la clé symétrique Kc et insèrent dans la partie en clair des messages LECM : l'index [0] de la clé active et le chiffrement de la clé Kc avec la clé de réseau active Kn[0]. Le module terminal qui reçoit un tel message récupère comme ci-dessus la clé Kn[0] à l'aide de l'index [0] extrait de la partie en clair du message. Il peut ensuite retrouver la clé Kc en déchiffrant l'information E_{Kn[0]}(Kc) puis déchiffrer les données protégées à l'aide de Kc.

Grâce à l'invention, il est possible de faire évoluer des réseaux numériques domestiques en garantissant toujours une protection contre la copie illicite tout en permettant aux utilisateurs honnêtes de relire les données enregistrées dans le passé.

## Revendications

1. Procédé de réception de données dans un dispositif récepteur (2) raccordé à un réseau et contenant une clé de déchiffrement du réseau active (Kn[0]) pour déchiffrer des données chiffrées en utilisant une clé de chiffrement active et au moins une clé de déchiffrement du réseau (Kn[i]) pour déchiffrer des données chiffrées à l'aide d'une clé de chiffrement utilisée antérieurement dans le réseau, **caractérisé en ce que** le procédé comprend :
- recevoir d'un dispositif raccordé au réseau des données chiffrées à l'aide d'une clé de chiffrement ainsi qu'un index correspondant à ladite clé de chiffrement ;
- extraire l'index correspondant à la clé de chiffrement de réseau utilisée pour chiffrer lesdites données ;
- déduire de cet index la clé de déchiffrement de réseau correspondante ; et
- déchiffrer les données à l'aide de ladite clé de déchiffrement.

2. Dispositif (2, 21) pour réception de données dans un réseau comprenant au moins un dispositif destiné à diffuser des données (60) sur le réseau, le dispositif comprenant :
- des moyens pour contenir une clé de déchiffrement du réseau active (Kn[0]) pour déchiffrer des données chiffrées en utilisant une clé de chiffrement active et un index correspondant, et au moins une clé de déchiffrement du réseau (Kn[i]) pour déchiffrer des données chiffrées à l'aide d'une clé de chiffrement utilisée antérieurement dans le réseau et des index correspondants ;
- des moyens pour recevoir des données chiffrées ainsi qu'un index correspondant à la clé de chiffrement de réseau utilisée pour chiffrer lesdites données ;
- des moyens pour extraire ledit index correspondant à la clé de chiffrement de réseau utilisée pour chiffrer lesdites données ;
- des moyens pour déduire de l'index extrait la clé de déchiffrement de réseau correspondante ; et
- des moyens pour déchiffrer les données à l'aide de ladite clé de déchiffrement.

3. Dispositif selon la revendication 2, **caractérisé en ce qu'**il contient toutes les clés de déchiffrement du réseau utilisées antérieurement depuis la création du réseau.
